# EUROPÄISCHE PATENTSCHRIFT

(11) **EP 2 022 144 B1**
(45) Veröffentlichungstag und Bekanntmachung des Hinweises auf die Patenterteilung: **12.09.2012**
(21) Anmeldenummer: 07728793.6
(22) Anmeldetag: 04.05.2007
(51) Int. Cl.: H01R 43/02, H01R 4/18

(54) **VERFAHREN ZUR HERSTELLUNG EINES DURCHGANGS- ODER ENDKNOTENS SOWIE DURCHGANGS- ODER ENDKNOTEN**
CONNECTING PASSAGE NODE OR END NODE AND METHOD FOR PRODUCTION THEREOF
PROCEDE POUR PRODUIRE UN NOEUD DE TRANSIT OU D'EXTREMITE ET NOEUD DE TRANSIT OU D'EXTREMITE

(30) Priorität: 05.05.2006 DE 102006021422
(43) Veröffentlichungstag der Anmeldung: 11.02.2009
(73) Patentinhaber: Schunk Sonosystems Gmbh, 35435 Wettenberg (DE)
(72) Erfinder: STROH, Dieter, 35435 Wettenberg (DE); STROH, Heiko, 35435 Wettenberg (DE); WAGENBACH, Udo, 35418 Buseck (DE)
(74) Vertreter: Stoffregen, Hans-Herbert
(86) Internationale Anmeldenummer: PCT/EP2007/054340
(87) Internationale Veröffentlichungsnummer: WO 2007/128790

(56) Entgegenhaltungen:
- EP-A1- 0 133 883
- WO-A1-2004/004079
- DE-A1- 2 723 029
- DE-A1- 10 123 636

## Beschreibung

Die Erfindung bezieht sich auf ein Verfahren zum Herstellen eines im Querschnitt eine Polygon- oder Rechteckgeometrie aufweisenden Durchgangs- oder Endknotens aus elektrischen Leitern wie Litzen durch Kompaktieren und anschließendes Verschweißen der Leiter in einem verstellbaren und im Querschnitt polygon- wie rechteckförmigen Verdichtungsraum einer Ultraschallschweißmaschine, wobei gegenüberliegende Begrenzungsflächen des Verdichtungsraums Abschnitte zum einen einer Sonotrode und zum anderen einer dieser gegenüberliegenden Gegenelektrode sind, wobei die Leiter in ein Formteil eingebracht und mit diesem verschweißt werden.

Ein Ultraschallschweißverfahren ist der EP-B-0 723 713 zu entnehmen, um Durchgangs- oder Endknoten in Quaderform herzustellen, die eine hohe Festigkeit aufweisen. Durch die Quaderform ergibt sich die Möglichkeit eines normierten Einbaus bzw. Verschaltung.

Ein prinzipieller Aufbau einer Ultraschallschweißvorrichtung mit in Höhe und Breite verstellbarem Verdichtungsraum sind auch der DE-C-37 19 083 oder der WO-A-2006/010551 zu entnehmen. Dabei können entweder nur Litzen untereinander oder Litzen und eigensteife Träger miteinander verbunden werden.

Aus der DE-A-103 36 408 ist ein Verfahren zum Verbinden eines Elektrokabels mit einem hülsenförmigen Verbindungselement bekannt, wobei das Elektrokabel in die Einfuhrbohrung der Hülse eingeführt und sodann radial nach innen zusammengedrückt wird, um den eingeführten Abschnitt des Elektrokabels gleichförmig über dessen gesamten Umfang einzuschnüren, und anschließend das hülsenförmige Verbindungselement mit einem Kontaktelement durch Ultraschallschweißen zu verbinden. Um das Elektrokabel gleichförmig einzuschnüren, wird eine Rundknetmaschine eingesetzt.

Zur Herstellung einer elektrisch leitenden Verbindung von mit einem Isolierlack versehenen Drähten schlägt die DE-B-102 29 565 (= WO-A-2004/004079) vor, dass diese von einer Hülse umgeben werden, die mit den Lackdrähten zwischen einem Amboss und einer Sonotrode einer Ultraschallschweißvorrichtung angeordnet und sodann verformt und verschweißt werden. Als Ergebnis ist eine im Querschnitt ellipsen- oder ovalförmige Verbindung erzielbar.

Ein gattungsgemäßes Verfahren ist der EP-A-0 133 883 zu entnehmen. Um lackierte Drähte und/oder Litzen untereinander mittels Ultraschallschweißens zu verbinden, werden erstere in ein U-förmiges Profilteil eingebracht, das mit einem Deckel verschließbar ist. Das Profilteil ist in seiner Breite an die Breite einer Ausnehmung in einem Amboss angepasst, in die das Formteil zusammen mit den Drähten zum Verschweißen eingebracht wird. In die Ausnehmung taucht sodann eine Sonotrode einer Ultraschallschweißvorrichtung ein.

Um einen metallischen Leiter mit einem um diesen gewickelten metallischen Draht zu verbinden, wird über einen Teil des gewickelten Leiters eine Hülse geschoben, die in einen Verdichtungsraum gelegt wird, in dem eine Elektrode einer Press-Schweißvorrichtung eintaucht.

Nach der DE-A-27 23 029 werden lackierte und unlackierte Drähte mittels Widerstandsschweißens verbunden.

Beim Ultraschall-Verschweißen von Leitern unterschiedlicher Materialeigenschaften oder sehr dünne Litzen aufweisenden Leitern muss festgestellt werden, dass die Schweißgüte häufig den gestellten Anforderungen nicht genügt, sei es, dass die erforderliche innige Verbindung nicht herstellbar ist, sei es, dass die dünnen Litzen abbrechen. Daher ist es Aufgabe der vorliegenden Erfindung, schwierig oder nach dem Stand der Technik grundsätzlich nicht verschweißbare elektrische Leiter zu einem End- bzw. Durchgangsknoten zu verbinden. Dabei soll nach einem weiteren Aspekt der Erfindung der Knoten hohen mechanischen und dynamischen Belastungen standhalten, um sicherzustellen, dass Beschädigungen der Leiter vermieden und Leiter unterschiedlicher Materialeigerischaften bzw. Materialien in der erforderlichen Qualität verschweißt werden können. Auch sollen problemlos Leiter aus Formteilen in kurzen Taktzeiten verschweißt werden können, auch dann, wenn diese in nacheinanderfolgenden Schweißungen dimensionsmäßig voneinander abweichen.

Zur Lösung der Aufgabe sieht die Erfindung verfahrensmäßig im Wesentlichen vor, dass die Leiter in eine Hülse eingebracht und anschließend die Hülse mit den Leitern in dem Verdichtungsraum zu dem End- oder Durchgangsknoten mit einem polygonförmigen Querschnitt verschweißt werden, wobei der Verdichtungsraum durch Verstellen sowohl in der Höhe als auch der Breite an die Hülse angepasst wird.

Dadurch, dass die Leiter in eine Hülse einbringbar sind, besteht die Möglichkeit, dass erstere aus unterschiedlichen Materialien bestehen bzw. unterschiedliche Materialeigenschaften aufweisen können, die es nach dem Stand der Technik nicht oder nur schwer ermöglichen, dass ein Verschweißen zu einem End- oder Durchgangsknoten hoher Festigkeit durchführbar ist. Dabei können auch fein- oder feinstdrähtige Litzen ohne Beschädigung der Einzeladern verschweißt werden. Die Hülse selbst bietet einen zusätzlichen mechanischen Schutz bezüglich hoher mechanischer und dynamischer Belastungen. Dabei ist sichergestellt, dass unabhängig von der Ausgangsform der Hülse diese mit den Leitern zu dem End- oder Durchgangsknoten gewünschter mehrkantsäuliger, insbesondere quaderförmiger Geometrie verformt und verschweißt werden.

Durch die Hülse ergibt sich insbesondere auch der Vorteil, dass Materialien verschweißt werden können, die ansonsten dazu neigen, an den Werkzeugen der Ultraschallschweißmaschine anzuhaften.

Es besteht die Möglichkeit, Aluminiumleiter, beschichtete Leiter wie kupferplattierte Aluminiumleiter, die aus einem aus Aluminium bestehenden Kern bestehen, der von einer Kupferschicht umgeben ist, verzinnte Leiter oder Leiter aus Eisenwerkstoff wie Edelstahl innig unter- und miteinander zu verbinden, eine Möglichkeit, die der Stand der Technik ohne zusätzliche Bearbeitungsschritte nicht kennt. Auch können Massivleiter und Litzen problemlos miteinander verschweißt werden.

Erfindungsgemäß kann ein Verbinden in einem üblichen Verdichtungsraum einer Ultraschallschweißvorrichtung erfolgen, wie diese zum Beispiel der EP-B-0 723 713 zu entnehmen ist, der in Höhe und Breite auf Hülsen unterschiedlicher Querschnitte angepasst werden kann. Ein Verschweißen mit einer Widerstandsschweißmaschine ist gleichfalls möglich.

Es kann eine Verarbeitung unterschiedlicher Leiter - quasi ein Materialmix -, auch mit Massivdrähten, erfolgen, ohne dass Nachteile in Kauf genommen werden müssen.

Insbesondere ist vorgesehen, dass die Leiter in eine z. B. eine Hohlzylindergeometrie aufweisende Hülse geschoben werden, wobei als Hülse eine solche verwendet werden kann, die an einem Ende geschlossen ist, um einen Endknoten herzustellen, oder an beiden Enden zum Einführen von Leitern offen ist, um einen End- oder Durchgangsknoten auszubilden. Die Hülse muss nicht geschlossen sein. Z. B. ein Körper mit U-Geometrie, von dessen Seitenrändern umbiegbare flächige Abschnitte ausgehen, die beim Verschweißen aufeinander zu liegen kommen und verschweißt werden, ist gleichfalls denkbar.

Insbesondere sieht die Erfindung vor, dass die Hülse derart verformt wird, dass die an den senkrecht zu den Abschnitten von Sonotrode und Gegenelektrode verlaufenden Begrenzungsflächen des Verdichtungsraums anliegenden Bereiche durch Stauchen teilweise nach innen gefaltet werden. Hierdurch ergibt sich eine besonders hohe Stabilität und sichere Verbindung zu den von der Hülse aufgenommenen Leitern.

Um sicherzustellen, dass die von der Hülse aufgenommenen Leiter nicht abbrechen und somit hohen mechanischen und dynamischen Belastungen standhalten, sieht eine Weiterbildung vor, dass das offene Ende der vor dem Schweißen nicht zwingend umlaufend geschlossenen Hülse trompetenartig erweitert ist, das bei der Herstellung des End- oder Durchgangsknotens außerhalb des Verdichtungsraums verbleiben kann.

Nach einer Weiterbildung der Erfindung wird vorgeschlagen, dass das offene Ende der Hülse einen umlaufenden verstärkten Rand wie eine Wulst aufweist, der beim Verschweißen außerhalb des Verdichtungsraums verbleibt.

Durch die trompetenartigen Erweiterungen bzw. wulstartigen Randausbildungen an den offenen Enden der Hülsen ergibt sich des Weiteren der Vorteil, dass ein Abknicken der Leiter an scharfen Kanten unterbleibt. Gleichzeitig wird das Einfädeln der zu verschweißenden Leiter erleichtert.

Durch all diese Maßnahmen wird sichergestellt, dass die aus der Hülse herausgeführten Leiter hohen mechanischen Beanspruchungen standhalten.

Die Hülse besteht aus einem Material, das beim SchweiBprozess, insbesondere mittels Ultraschall verformt und mit den Leitern verschweißt werden kann.

Dabei werden als Hülsen vorzugsweise solche benutzt, die Wandstärken im Bereich zwischen 0,05 mm und 0,5 mm, vorzugsweise zwischen 0,15 mm und 0.4 mm aufweisen. Als bevorzugte Materialien sind Kupferhülsen oder kupferversilberte Hülsen zu nennen.

Um reproduzierbare Schweißergebnisse zu erzielen bzw. die Überwachung des Kompaktierens und Verschweißens zu vereinfachen, sieht eine hervorzuhebende Weiterbildung der Erfindung vor, dass die Hülse mit vorgegebener Länge in dem Verdichtungsraum positioniert wird. Dies kann dadurch realisiert werden, dass ein Anschlag vorgesehen ist, der mit einem von der Hülse ausgehenden Vorsprung oder gleichwirkendem Element wechselwirkt. Insbesondere handelt es sich hierbei um die trompetenartige Erweiterung bzw. den wulstartigen Rand, die bzw. der das Hineinschieben in den Verdichtungsraum beim Zusammenwirken mit einem entsprechend angeordneten Anschlag begrenzt. Wird eine trompetenartige Erweiterung bzw. ein wulstartiger Rand benutzt, so kann der Anschlag z. B. als Blende ausgebildet sein, der vor dem Verdichtungsraum in Einschiebrichtung der Hülse angeordnet ist.

Des Weiteren kann insbesondere ein Endknoten von einer Isolierkappe umgeben werden, die einen umlaufenden Vorsprung aufweist, der zwischen dem freien Ende der Hülsen. und zu diesem beabstandeten Isolierungen von elektrischen Leitern verrastet. Auch besteht die Möglichkeit, dass eine Isolierkappe eine umlaufende nutartige Vertiefung aufweist, in die bei aufgeschobener Isolierkappe der trompetr-nartige bzw. wulstartige Rand der Hülse verrastend eingreift.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißvorrichtung,
- Fig. 2: eine Prinzipdarstellung eines in Höhe und Breite verstellbaren Verdichtungsräums,
- Fig. 3 - 5: eine erste Ausführungsform zur Herstellung eines Durchgangsknotens,
- Fig. 6 - 8: eine Prinzipdarstellung zur Herstellung eines Endknotens,
- Fig. 9: ein von einer Isolierkappe umgebener Endknoten,
- Fig. 10: eine weitere Prinzipdarstellung der Herstellung eines Endknotens,
- Fig. 11: einen Endknoten in Dreiecksäulengeometrie und
- Fig. 12: einen Endknoten in Sechskantsäulengeometrie.

Um elektrische Leiter unterschiedlicher Materialien bzw. Materialeigenschaften, insbesondere Litzen, die fein- und feinstdrähtig ausgebildet sein können, einwandfrei zu End-oder Durchgangsknoten mittels Ultraschallschweißens zu verbinden, wobei gleichzeitig eine hohe mechanische und dynamische Belastbarkeit sowie eine gute elektrische Kontaktierung gegeben und eine quaderförmige Endgeometrie erzielbar ist, wird erfindungsgemäß vorgeschlagen, dass die Leiter zunächst in eine Hülse und sodann diese mit den Leitern in einen Verdichtungsraum einer Ultraschallschweißvorrichtung eingebracht und in diesem kompaktiert und verschweißt werden.

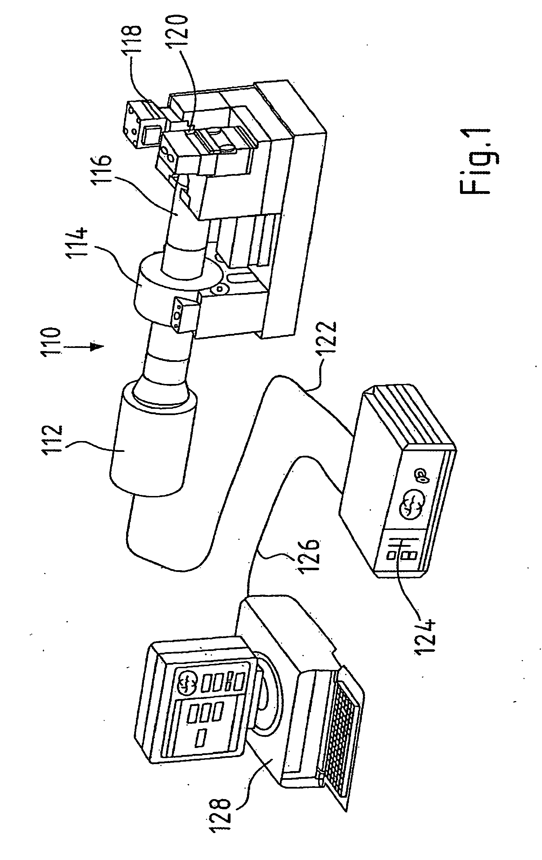

Ein prinzipieller Aufbau einer entsprechenden Ultraschallschweißanordnung ist der Fig. 1 zu entnehmen. Eine Ultraschallschweißvorrichtung oder -maschine 110 umfasst in gewohnter Weise einen Konverter 112, gegebenenfalls einen Booster 114 sowie eine Sonotrode 116. Der Sonotrode 116 bzw. einer Fläche dieser sind eine mehrteilige Gegenelektrode 118 - auch Amboss genannt - sowie ein Schieber 120 zugeordnet. Über den der Sonotrode 116 gegenüberliegenden Abschnitt der Gegenelektrode 118 wird auf die zu verschweißenden Teile die erforderliche Kraft durch Relativbewegung des Abschnitts zu der Sonotrode 116 erzeugt. Nach erfolgtem Kompaktieren wird die Sonotrode 116 in Schwingung versetzt, um den Schweißprozess durchzuführen.

Beim Kompaktieren werden nicht nur der der Sonotrode 116 gegenüberliegende Abschnitt der Gegenelektrode 118, sondern auch der Schieber 120 in Richtung der gegenüberliegenden Begrenzung, also des im Ausführungsbeispiel vertikal verlaufenden Abschnitts der Gegenelektrode 116 verstellt.

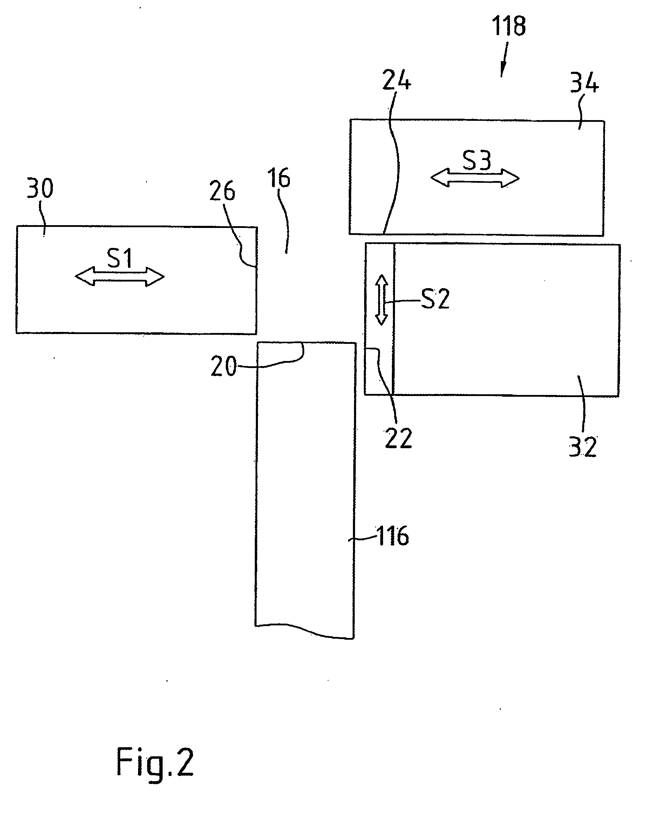

Die Sonotrode 116 bzw. deren Fläche, die Gegenelektrode 118 mit ihrem vertikalen Abschnitt sowie der Schieber 120 begrenzen im Ausführungsbeispiel einen im Querschnitt rechteckförmigen Verdichtungsraum, der anhand der Fig. 2 näher erläutert wird.

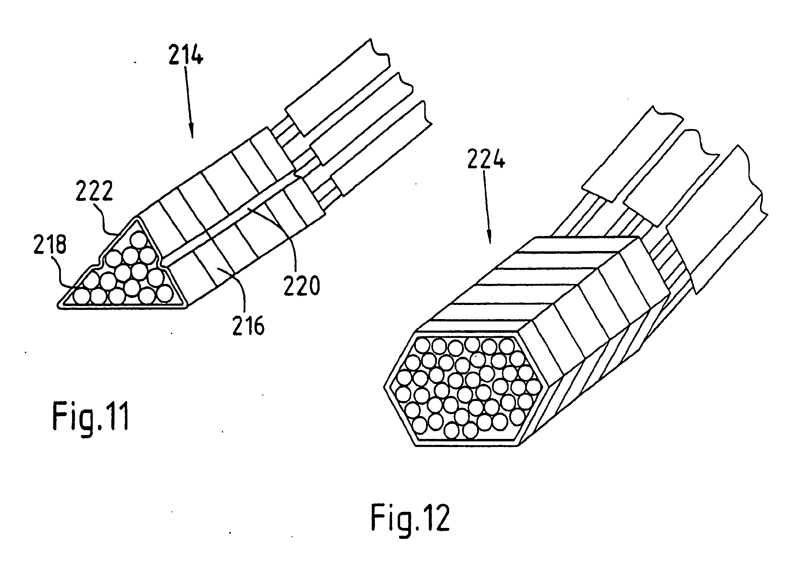

Selbstverständlich kann der Verdichtungsraum auch einen anderen Querschnitt eines insbesondere Polygons wie Dreiecks oder Sechsecks aufweisen, um End- oder Durchgangsknoten herzustellen, die die Geometrie einer Mehrkantsäule wie Dreikantsäule oder Sechskantsäule aufweisen, wie dies durch die Fig. 11 und 12 verdeutlicht wird.

Um einen Verdichtungsraum dreieckigen Querschnittes zur Verfugung zu stellen und in diesem von einer Hülse umgebende Leiter zu verdichten und zu verschweißen, kann eine Ultraschaltschweißvonichtung zum Einsatz gelangen, wie diese der WO-A-2005/021203 zu entnehmen ist, auf deren Offenbarung ausdrücklich verwiesen wird.

Der Konverter 112 ist über eine Leitung 122 mit einem Generator 124 verbunden, der seinerseits über eine Leitung 126 zu einem Rechner 128 führt, über den der Schweißprozess gesteuert wird. Hierzu werden Schweißparameter bzw. Wandstärke der Hülse sowie Querschnitt der zu verschweißenden Leiter eingegeben bzw. entsprechend abgespeicherte Werte abgerufen.

In Fig. 2 ist in Prinzipdarstellung der Verdichtungsraum 16 der Ultraschallschweißvorrichtung 110 der Fig. 1 dargestellt. Der Verdichtungsraum 16 zeigt im Querschnitt eine rechteckförmige Geometrie und ist stirnseitig offen, um zu verschweißende Leiter hindurchzuführen.

Der Verdichtungsraum 16 weist eine erste Begrenzungsfläche 20 auf, die von einem Abschnitt der Sonotrode 116 gebildet wird. Gegenüberliegend zu der Fläche 20 erstreckt sich eine zweite Begrenzungsfläche 24, die von einem die Funktion der Gegenelektrode bzw. des Ambosses 118 ausübenden Querhaupt 34 gebildet wird, der von einem vertikal verstellbaren Träger 32 ausgeht, der eine senkrecht zu den Begrenzungsflächen 20, 24 verlaufende weitere Begrenzungsfläche 22 bildet. Gegenüberliegend zu der Begrenzungsfläche 22 ist ein Schieber 30 angeordnet, der eine senkrecht zu der ersten und zweiten Begrenzungsfläche 20, 24 verlaufende vierte Begrenzungsfläche 26 bildet, die parallel zu der Begrenzungsfläche 22 verläuft.

Beim Einbringen der Hülse mit den Leitern in den Verdichtungsraum 16 ist das Querhaupt 34 entsprechend der Darstellung in Fig. 2 derart zurückgezogen, dass der Verdichtungsraum 16 von oben zugänglich ist. Selbstverständlich besteht auch die Möglichkeit, die Hülse von einer offenen Stirnseite des Verdichtungsraums 16 in diesen einzubringen. Dies ist insbesondere dann zu bevorzugen, wenn die Hülse in dem Verdichtungsraum 16 mit gewünschter vorgegebener Länge positioniert werden soll.

Die Bewegungsrichtung des Querhauptes 34, des Trägers 32, der Gegenelektrode 118 sowie des Schiebers 30 sind durch die Pfeile S1, S2 und S3 symbolisiert. Hieraus ergibt sich, dass der Verdichtungsraum 16 in Höhe und Breite verstellbar ist, um an eine in den Verdichtungsraum 16 einzubringende Hülse und zu verschweißende Leiter angepasst zu werden.

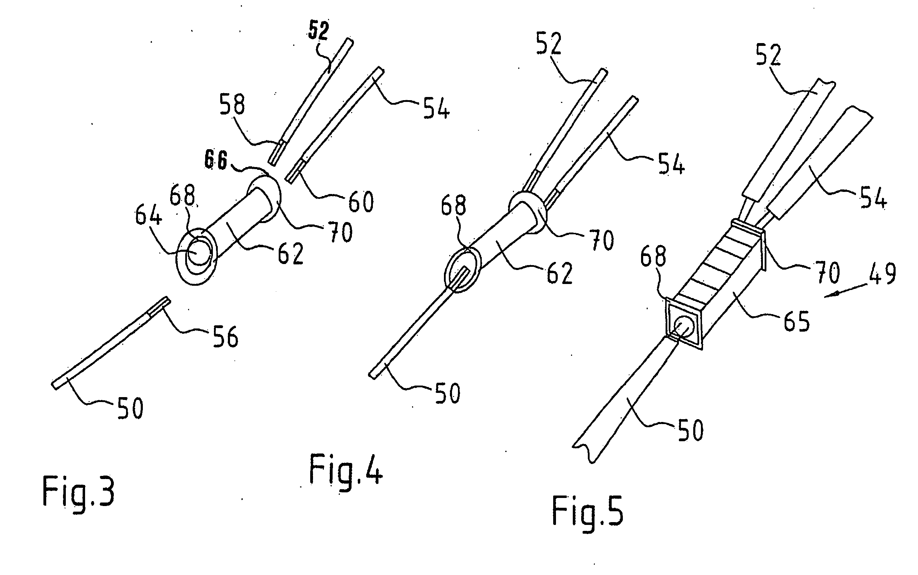

Anhand der Fig. 3 - 5 soll die Herstellung eines Durchgangsknotens 49 erläutert werden, durch den Leiter 50, 52, 54, die aus einzelnen Litzen bestehen, miteinander verbunden werden. Hierzu kann die ansonsten von einer Isolierung umgebenen Leiter 50, 52, 54 in ihren Enden abisoliert sein, so dass die Litzen 56, 58, 60 der Leiter 50, 52, 54 frei liegen.

Selbstverständlich wird die Erfindung nicht verlassen, wenn zumindest einige der Leiter in ihren zu verschweißenden Bereichen eine Isolierung aufweisen. Diese würde beim Ultraschallschweißen aufgrund der Beaufschlagung mit Ultraschallschwingungen weggedrückt werden, so dass die Leiter abisoliert und somit untereinander sowie mit der diese umgebenden Hülse verschweißt werden können.

Die Leiter 50, 52, 54, d.h. die Litzen 56, 58, 60 können aus unterschiedlichen Materialien bestehen. So können die Litzen 56, 58, 60 aus Aluminium, kupferplattiertem Aluminium oder verzinntem Kupfermaterial oder Eisenwerkstoff wie Edelmetall bestehen, ohne dass hierdurch eine Einschränkung der erfindungsgemäßen Lehre erfolgen soll. Auch können die Litzen 56, 58, 60 fein- bzw. feinstdrähtig sein.

Die vorzugsweise abisolierten Litzen 56, 58, 60 werden im Ausfühungsbeispiel in eine eine Hohlzylindergeometrie aufweisende Hülse 62 über deren offene Stirnseiten 64, 66 eingeschoben, wie sich aus einem Vergleich der Fig. 3 und 4 ergibt. Sodann wird die Hülse 62 mit den in diese eingebrachten grundsätzlich abisolierten Litzen 56, 58, 60 in den Verdichtungsraum 16 eingelegt, um sodann den Amboss 118 und den Schieber 30 derart zu verschieben, dass die Hülse 62 berührend aufgenommen wird. Anschließend erfolgt ein Kompaktieren der Hülse 62 und der Litze 56, 58, 60 und ein Verschweißen durch Ultraschallerregung der Sonotrode 116. Dabei erfährt die Hülse 62 eine Formveräderung derart, dass sich eine quaderförmige Außengeometrie ergibt, wie die Fig. 5 verdeutlicht. Die Hülse 62 bildet mit den Litzen 56, 58, 60 den Durchgangsknoten 49.

Im Ausführungsbeispiel weist die Hülse 62 wulstartige bzw. trompetenartig ausgebildete Stirnränder 68, 70 auf, die außerhalb des Verdichtungsraums 16 beim Kompaktieren und Verschweißen verlaufen. Ungeachtet dessen nehmen die Stimränder 68, 70 während des Kompaktierens und Verschweißens einen Geometrieverlauf an, der die Außengeometrie der Hülse 65 nach dem Kompaktieren und Verschweißen zeigt.

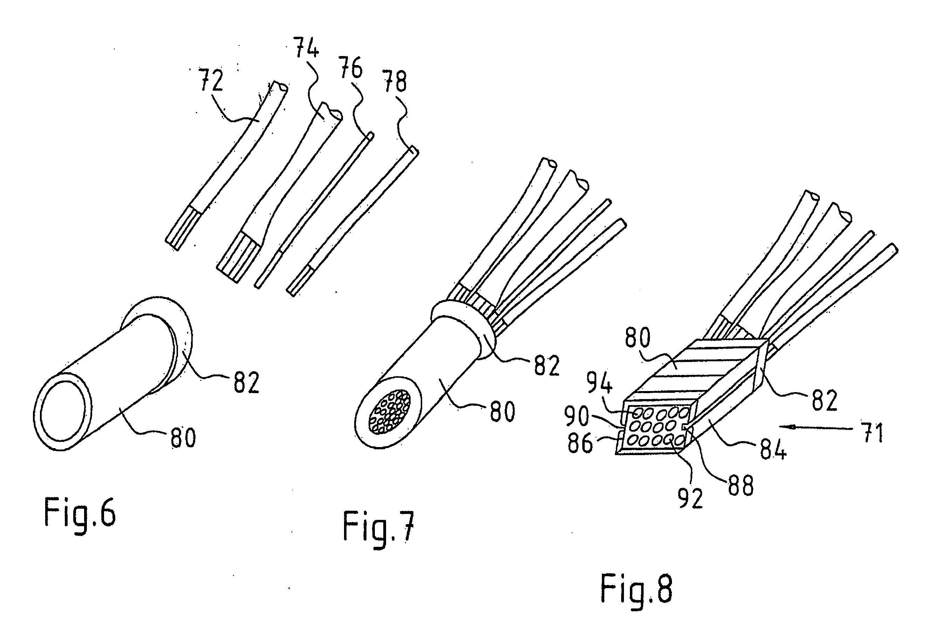

Die Fig. 6 - 8 zeigen prinzipiell die Herstellung eines Endknotens 71, bei dem Leiter bzw. Kabel 72, 74, 76, 78 unterschiedlicher Stärke und/oder aus unterschiedlichen Materialien bestehend in eine Hülse 80 eingebracht und sodann in dem Verdichtungsraum 16 in zuvor beschriebener Art und Weise verdichtet und verschweißt werden. Die Hülse 80 weist ebenfalls eine Hohlzylindergeometrie auf, wobei leiterseitig verlaufender Rand 82 trompetenartig erweitert bzw. wulstartig ausgebildet ist. Beim Verdichten und Verschweißen verläuft der Rand 82 außerhalb des Verdichtungsraums 16.

Wie sich aus einem Vergleich der Fig. 6 - 8 ergibt, nimmt die Hülse 80 beim Verdichten und Verschweißen die Innengeometrie des Verdichtungsraums 16 an, so dass sich eine quaderförmige Endgeometrie ergibt. Dabei erfolgt beim Kompaktieren der Hülse 80, also bei der Umformung von der Hohlzylindergeometrie in die Hohlquadergeometrie ein Zusammendrücken der entlang der im Ausführungsbeispiel sich vertikal erstreckenden Begrenzungsflächen 22, 26 verlaufenden Bereiche 84, 86 der Hülse 80 derart, dass diese nach innen gefaltet werden, wie die Darstellung in Fig. 8 verdeutlicht. So weisen die Seitenwandungen 84, 86 der zu einem Quader umgeformten Hülse 80 nach innen gerichtete Falten 88, 90 auf, die zu einem zusätzlichen Verdichten der innerhalb der Hülse 80 verlaufenden Litzen 90, 92 der Leiter 72, 74, 76, 78 führen, so dass der erforderliche mechanische und elektrisch leitende Kontakt zwischen den Litzen 90, 92 und somit den Leitern 72, 74, 76, 78 sichergestellt ist. Die Ausbildung der Falten 88, 90 hängt vom Umfang des Kompaktierens und dem Verhältnis des Innendurchmessers der Hülse 80 zum Gesamtquerschnitt der in die Hülse 80 eingebrachten Leiter 72, 74, 76, 78 ab.

Losgelöst hiervon können Innenquerschnitt der Hülse 80 und Gesamtquerschnitt der Leiter 72, 74, 76, 78 so aufeinander abgestimmt werden, dass ein problemloses Einführen bzw. -fädeln der Litzen 72, 74, 76, 78 in die Hülse 80 möglich ist, ohne dass die Schweißverbindung und die mechanische Festigkeit negativ beeinflusst werden; denn beim Kompaktieren und Verschweißen erfolgt eine Anpassung des Innenquerschnitts der Hülse 80 an den Gesamtquerschnitt der Litzen 72, 74, 76, 78, wobei durch Stauchen bedingt die Hülse 80 in ihren Seitenwandungen 84, 86 zumindest abschnittsweise nach innen gefaltet wird.

Aus der Fig. 8 ergibt sich des Weiteren, dass der Rand 82 der Hülse 80 nach dem Kompaktieren und Verschweißen der Leiter 72, 74, 76, 78 einen Verlauf zeigt, der dem der Hülse 80 in seiner Endgeometrie entspricht.

Als Hülse 62, 80 wird insbesondere eine aus Metall wie Nickel oder Kupfer bestehende oder Kupfer enthaltende oder mit anderem geeigneten Material innen und/oder außen beschichtete Hülse benutzt, die standardmäßig zur Verfügung steht und somit kostengünstig ist. Die Wandstärke der Hülse 62, 80 sollte zwischen 0,05 mm und 0,5 mm, insbesondere zwischen 0,15 mm und 0,4 mm liegen, um im erforderlichen Umfang die Verformung während des Verdichtens und Verschweißen im Verdichtungsraum 16 sicherzustellen, wobei gleichzeitig das gewünschte Nach-innen-Falten der Seitenwandungen 84, 86 erfolgen kann.

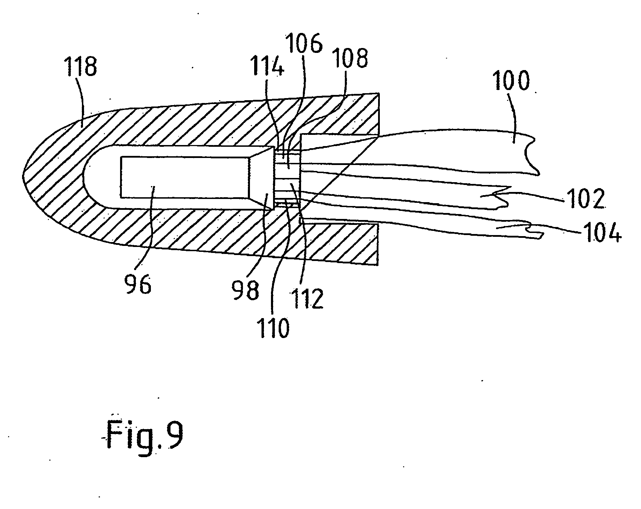

Wie sich prinzipiell aus den Darstellungen der Fig. 3 - 8 ergibt, enden die Isolierungen der Leiter 50, 52, 54, 72, 74, 76, 78 beabstandet zum jeweiligen Stirnrand der Hülse 62, 84. so dass sich quasi eine umlaufende Vertiefung ergibt, wie diese der Fig. 9 prinzipiell zu entnehmen ist. So ist eine Hülse 96 mit sich erweiterndem Rand 98 dargestellt, zu dem beabstandet die Isolierungen 100, 102, 104 von nicht näher bezeichneten Leitern verlaufen, deren Litzen 106, 108, 110 mit der Hülse 96 zu einem Endknoten verschweißt worden sind. In der so gebildeten ringförmigen Vertiefung 112 greift im Ausführungsbeispiel ein ringförmig umlaufender Innenvorsprung 114 einer Isolierkappe 118 ein, die die Hülse 96 umgibt und die sich bis in den Bereich der Isolierungen 100, 102, 104 erstreckt. Hierdurch erfolgt ein mechanisches Verrasten der Isolierkappe 118.

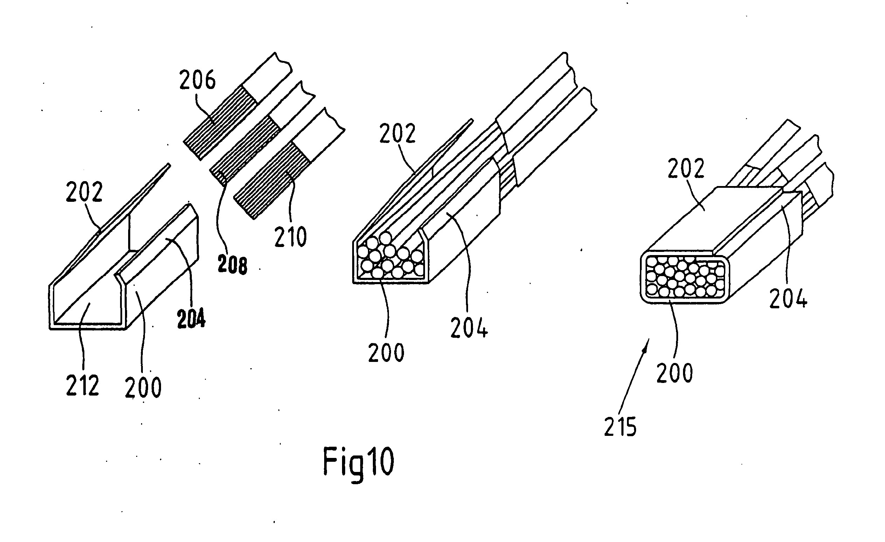

Wurde bei den zuvor erläuterten Ausführungsbeispielen eine umlaufend geschlossene Hülse insbesondere quaderförmiger Außengeometrie benutzt, um in diese elektrische Leiter einzubringen und miteinander zu verschweißen, so wird hierdurch die erfindungsgemäße Lehre nicht beschränkt. Vielmehr besteht auch die Möglichkeit, umfangsseitig offene Hülsen zu verwenden, die sodann beim Kompaktieren und Verschweißen geschlossen und mit den in diese eingebrachten Litzen verschweißt werden. Dies soll anhand der Fig. 10 verdeutlicht werden. So wird als Hülse 200 ein Körper benutzt, der im Ursprungszustand eine U-Geometrie aufweist, von dessen Längsrändern abgewinkelte flächige Abschnitte 202, 204 ausgehen, so dass sich quasi eine offene Schachtel mit freien Stirnflächen ergibt. In die Hülse 200 werden sodann im Ausführungsbeispiel abisolierte Enden 206, 208, 210 von elektrischen Leitern eingebracht, die aus unterschiedlichen Materialien und/oder Querschnitten bestehen können. Nach Einbringen der abisolierten Enden 206, 208, 210 in den von der Hülse 200 umgebenen Innenraum 212 wird die Einheit Litzen-Hülse in einen Verdichtungsraum einer Ultraschallschweiß-oder Widerstandsschweißvorrichtung eingebracht, um sodann kompaktiert und verschweißt zu werden. Es ergibt sich ein Endknoten 215, wie dieser im rechten Bild der Fig. 10 rein prinzipiell dargestellt ist. Man erkennt gleichzeitig, dass die Abschnitte 202, 204 eine Breite aufweisen, dass diese zumindest nach dem Kompaktier- und Verschweißvorgang übereinanderlappen und somit verschweißt sind.

Auch wenn im Ausführungsbeispiel der Fig. 10 gleichfalls ein Knoten rechteckförmigen Querschnitts prinzipiell dargestellt ist, so wird hierdurch die erfindungsgemäße Lehre nicht eingeschränkt. Vielmehr besteht die Möglichkeit, Durchgangs- oder Endknoten herzustellen, die eine von einer Quadergeometrie abweichende Form aufweisen. Dies ergibt sich aus den Fig. 11 und 12. So wird in Fig. 11 ein Endknoten 214 dargestellt, der die Geometrie einer Dreikantsäule aufweist. Es kann folglich ein Verschweißen in einer Vorrichtung durchgeführt worden sein, wie diese in der WO-A-2005/021203 beschrieben ist. Man erkennt, dass die an den Gegenelektrodenabschnitten anliegenden Wandungen 216, 218 der Hülse nach innen gerichtete Faltungen oder Sicken 220, 222 aufweisen, die durch das Kompaktieren entstehen.

In Fig. 12 ist ein Knoten 224 dargestellt, der die Geometrie einer Sechskantsäule aufweist.

## Patentansprüche

1. Verfahren zum Herstellen eines im Querschnitt eine Polygon- oder Rechteckgeometrie aufweisenden Durchgangs- oder Endknotens (49, 71, 214, 215, 224) aus elektrischen Leitern (50, 52, 54, 72, 74, 76, 78, 200, 102, 104, 206, 208, 219) wie Litzen durch Kompaktieren und anschließendes Verschweißen der Leiter in einem verstellbaren und im Querschnitt polygon- wie rechteckförmigen Verdichtungsraum (16) einer Ultraschallschweißmaschine (110), wobei gegenüberliegende Begrenzungsflächen des Verdichtungsraums Abschnitte zum einen einer Sonotrode (116) und zum anderen einer dieser gegenüberliegenden Gegenelektrode (118) sind, wobei die Leiter in ein Formteil eingebracht und mit diesem verschweißt werden,
**dadurch gekennzeichnet,**
**dass** die Leiter (50, 52, 54, 72, 74, 76, 78, 200, 102, 104, 206, 208, 219) in eine Hülse (62, 80, 96) eingebracht und anschließend die Hülse mit den Leitern in dem Verdichtungsraum zu dem End- oder Durchgangsknoten (49, 71, 214, 215, 224) mit einem polygonförmigen Querschnitt verschweißt werden, wobei der Verdichtungsraum durch Verstellen sowohl in der Höhe als auch der Breite an die Hülse angepasst wird.

2. Verfahren nach Anspruch 1,
**dadurch gekennzeichnet,**
**dass** die Leiter (50, 52, 54, 72, 74, 76, 78, 200, 102, 104, 206, 208, 219) mit der Hülse (62, 80, 96, 200) zu den End- oder Durchgangsknoten (49, 71) rechteckförmigen Querschnitts verschweißt werden.

3. Verfahren nach Anspruch 1 oder 2,
**dadurch gekennzeichnet,**
**dass** die Leiter (50, 52, 54, 72, 74, 76, 78, 200, 102, 104, 206, 208, 219) in eine eine Mehrkantsäulen- wie Hohlzylindergeometrie aufweisende umfangssseitig geschlossene Hülse (62, 80, 96, 200) eingeschoben werden.

4. Verfahren nach zumindest einem der vorhergehenden Ansprüche,
**dadurch gekennzeichnet,**
**dass** die Leiter in einer im Ursprungszustand eine U-Geometrie aufweisende Hülse mit von ihrem Längsrand abgewinkelten flächigen Abschnitten eingebracht und sodann verschweißt werden, wobei die Abschnitte eine Breite aufweisen, dass diese nach dem Verschweißen übereinanderlappend verschweißt sind.

5. Verfahren nach zumindest einem der vorhergehenden Ansprüche,
**dadurch gekennzeichnet,**
**dass** Leiter bzw. Litzen (50, 52, 54, 72, 74, 76, 78, 200, 102, 104, 206, 208, 219) unterschiedlicher Materialien und/oder Querschnitte verschweißt werden.

6. Verfahren nach zumindest einem der vorhergehenden Ansprüche,
**dadurch gekennzeichnet,**
**dass** als Hülse (62, 80, 96, 200) eine solche verwendet wird, die an einem Ende geschlossen ist.

7. Verfahren nach zumindest einem der vorhergehenden Ansprüche,
**dadurch gekennzeichnet,**
**dass** die Hülse (62, 80, 96, 200) mit den Litzen (50, 52, 54, 72, 74, 76, 78, 200, 102, 104, 206, 208, 219) durch Verstellen der Abschnitte der Elektrode (116) und der Gegenelektrode (118) kompaktiert und verschweißt wird, wobei an senkrecht zu den Abschnitten verlaufenden weiteren Begrenzungsflächen (22, 26) des Verdichtungsraums anliegende Bereiche der Hülse während des Verdichtens bzw. Verschweißens nach innen gefaltet werden.

8. Verfahren nach zumindest einem der vorhergehenden Ansprüche,
**dadurch gekennzeichnet,**
**dass** die Hülse (62, 80, 96, 200) an ihrem offenen Ende trompetenartig ausgebildet ist, das bei der Herstellung des End- oder, Durchgangsknotens (49, 71) außerhalb des Verdichtungsraums (16) verläuft.

9. Verfahren nach zumindest einem der vorhergehenden Ansprüche,
**dadurch gekennzeichnet,**
**dass** die Hülse (62, 80, 96, 200) in dem Verdichtungsraum (16) in gewünschter vorgegebener Länge positioniert wird.

10. Verfahren nach zumindest einem der vorhergehenden Ansprüche,
**dadurch gekennzeichnet,**
**dass** das offene Ende der Hülse (62, 80, 96, 200) einen umlaufenden verstärkten Rand (68, 70) aufweist, der beim Verschweißen außerhalb des Verdichtungsraums (16) verbleibt.

11. Verfahren nach zumindest einem der vorhergehenden Ansprüche,
**dadurch gekennzeichnet,**
**dass** als Hülse (62, 80, 96, 200) eine solche verwendet wird, die aus Kupfer oder Aluminium besteht oder Kupfer oder Aluminium enthält.

12. Verfahren nach zumindest einem der vorhergehenden Ansprüche,
**dadurch gekennzeichnet,**
**dass** als Hülse (62, 80, 96, 200) eine solche verwendet wird, die aus Metall wie Nickel oder Kupfer oder außen- und/oder innenseitig beschichtetem wie versilbertem oder vergoldetem oder vernickeltem Kupfer besteht.

13. Verfahren nach zumindest einem der vorhergehenden Ansprüche,
**dadurch gekennzeichnet,**
**dass** als Hülse (62, 80, 96, 200) eine solche verwendet wird, die eine Wandstärke D mit 0,05 mm ≤ D ≤ 0,5 mm, insbesondere 0,15 mm ≤ D ≤ 0,4 mm aufweist.

14. Verfahren nach zumindest einem der vorhergehenden Ansprüche,
**dadurch gekennzeichnet,**
**dass** als Leiter (50, 52, 54, 72, 74, 76, 78, 200, 102, 104, 206, 208, 219) solche verwendet werden, die aus Kupfer oder mit Aluminium beschichtetem Kupfer oder Aluminium oder verkupfertem Aluminium bestehen oder verzinnt oder beschichtet sind oder aus einem Eisenwerkstoff wie Edelstahl bestehen.

## Claims

1. Method for manufacturing a passage node or end node (49, 71, 214, 215, 224) having in cross section a polygonal or rectangular geometry, of electrical conductors (50, 52, 54, 72, 74, 76, 78, 200, 102, 104, 206, 208, 219) such as strands by compacting and subsequent welding of the conductors in a compression space (16) of an ultrasonic welding machine (110), said compression space being adjustable and having a polygonal, such as rectangular shaped cross section, whereby opposite delimitation surfaces of the compression space are sections, on the one hand, of a sonotrode (116) and, on the other hand, of a counter-electrode (118) located opposite to the sonotrode, whereby the conductors are inserted into a shaped piece and are welded with it,
**characterized in,**
**that** the conductors (50, 52, 54, 72, 74, 76, 78, 200, 102, 104, 206, 208, 219) are inserted into a sleeve (62, 80, 96) and then the sleeve is welded in the compression space with the conductors to the end node or passage node (49, 71, 214, 215, 224) with a polygonal shaped cross section, whereby the compression space is adapted to the sleeve by adjustment in both the height and the width.

2. Method according to claim 1,
**characterized in,**
**that** the conductors (50, 52, 54, 72, 74, 76, 78, 200, 102, 104, 206, 208, 219) are welded with the sleeve (62, 80, 96, 200) to the end nodes or passage nodes (49, 71) of a rectangular cross section.

3. Method according to claim 1 or 2,
**characterized in,**
**that** the conductors (50, 52, 54, 72, 74, 76, 78, 200, 102, 104, 206, 208, 219) are inserted into a sleeve (62, 80, 96, 200) having the geometry of a polygonal column such as hollow cylinder and being closed at the peripheral area.

4. Method according to at least one of the preceding claims,
**characterized in,**
**that** the conductors are inserted and then welded in a sleeve having in the original state a U-geometry and plane sections angled from its longitudinal edge, said sections having a width that after welding these are welded overlapping.

5. Method according to at least one of the preceding claims,
**characterized in,**
**that** conductors, respectively strands (50, 52, 54, 72, 74, 76, 78, 200, 102, 104, 206, 208, 219) of differing materials and/or cross sections are welded.

6. Method according to at least one of the preceding claims,
**characterized in,**
**that** as sleeve (62, 80, 96, 200) is used one that is closed at one end.

7. Method according to at least one of the preceding claims,
**characterized in,**
**that** the sleeve (62, 80, 96, 200) is compacted and welded with the strands (50, 52, 54, 72, 74, 76, 78, 200, 102, 104, 206, 208, 219) by displacing the sections of the electrode (116) and the counter-electrode (118), whereby at further delimitation surfaces (22, 26) of the compression chamber that run perpendicular to the sections, adjoining areas of the sleeve are folded inward during the compression, respectively welding.

8. Method according to at least one of the preceding claims,
**characterized in,**
**that** the sleeve (62, 80, 96, 200) is trumpet-shaped at its open end, which during the manufacture of the end node or passage node (49, 71) runs outside the compression space (16).

9. Method according to at least one of the preceding claims,
**characterized in,**
**that** the sleeve (62, 80, 96, 200) is positioned in the compression space (16) in the desired preset length.

10. Method according to at least one of the preceding claims,
**characterized in,**
**that** the open end of the sleeve (62, 80, 96, 200) has a circumferential reinforced edge (68, 70) that remains outside the compression space (16) during welding.

11. Method according to at least one of the preceding claims,
**characterized in,**
**that** as sleeve (62, 80, 96, 200) is used one that consists of copper or aluminum, or contains copper or aluminum.

12. Method according to at least one of the preceding claims,
**characterized in,**
**that** as sleeve (62, 80, 96, 200) is used one that consists of metal like nickel or copper or copper that is coated on its outer and/or inner sides like silver-plated, gold-plated or nickel-plated copper.

13. Method according to at least one of the preceding claims,
**characterized in,**
**that** as sleeve (62, 80, 96, 200) is used one, that has a wall thickness D of 0.05 mm ≤ D ≤ 0.5 mm, especially 0.15 mm ≤ D ≤ 0.4 mm.

14. Method according to at least one of the preceding claims,
**characterized in,**
**that** as conductors (50, 52, 54, 72, 74, 76, 78, 200, 102, 104, 206, 208, 219) are used such, that consist of or are tinned or coated with copper or copper coated with aluminum or aluminum or copper-plated aluminum, or consist of a ferrous product like high-grade steel.

## Revendications

1. Procédé de fabrication d'un noeud de passage ou d'extrémité (49, 71, 214, 215, 224) présentant une forme polygonale ou rectangulaire en coupe transversale, composé de conducteurs électriques (50, 52, 54, 72, 74, 76, 78, 200, 102, 104, 206, 208, 219), tels que des fils toronnés, par le compactage suivi du soudage des conducteurs dans une chambre de compression (16) d'une soudeuse à ultrasons (110) réglable et de forme polygonale ou rectangulaire en coupe transversale, sachant que les faces de délimitation opposées de la chambre de compression sont les sections d'une sonotrode (116) d'une part, et à l'opposé de cette dernière, d'une contrélectrode (118) d'autre part, et que les fils toronnés sont introduits dans un moule et soudés avec ce dernier,
**caractérisé en ce que**
les conducteurs (50, 52, 54, 72, 74, 76, 78, 200, 102, 104, 206, 208, 219) sont introduits dans un manchon (62, 80, 96) et que le manchon est ensuite soudé aux conducteurs dans la chambre de compression pour former le noeud d'extrémité ou de passage présentant une coupe transversale polygonale (49, 71, 214, 215, 224), sachant que la chambre de compression est adaptée au manchon par réglage aussi bien en hauteur qu'en largeur.

2. Procédé selon la revendication 1,
**caractérisé en ce que**
les conducteurs (50, 52, 54, 72, 74, 76, 78, 200, 102, 104, 206, 208, 219) sont soudés au manchon (62, 80, 96, 200) pour former les noeuds d'extrémité ou de passage (49, 71) présentant une coupe transversale rectangulaire.

3. Procédé selon la revendication 1 ou 2,
**caractérisé en ce que**
les conducteurs (50, 52, 54, 72, 74, 76, 78, 200, 102, 104, 206, 208, 219) sont introduits dans un manchon (62, 80, 96, 200) fermé sur son pourtour et qui présente la forme géométrique d'une colonne polygonale telle qu'un cylindre creux.

4. Procédé selon au moins l'une des revendications précédentes,
**caractérisé en ce que**
les conducteurs sont introduits dans un manchon présentant une forme de U à l'état d'origine, puis soudés avec les sections en nappe qui forment un angle avec leur bord longitudinal, sachant que les sections présentent une largeur telle qu'elles se chevauchent après le soudage.

5. Procédé selon au moins l'une des revendications précédentes,
**caractérisé en ce que**
les conducteurs ou les fils toronnés (50, 52, 54, 72, 74, 76, 78, 200, 102, 104, 206, 208, 219) présentant des coupes transversales et/ou de matériaux différents sont soudés.

6. Procédé selon au moins l'une des revendications précédentes,
**caractérisé en ce que**
le manchon (62, 80, 96, 200) utilisé doit être fermé à l'une de ses extrémités.

7. Procédé selon au moins l'une des revendications précédentes,
**caractérisé en ce que**
le manchon (62, 80, 96, 200) est compacté et soudé avec les fils toronnés (50, 52, 54, 72, 74, 76, 78, 200, 102, 104, 206, 208, 219) par déplacement des sections de l'électrode (116) et de la contrélectrode (118), sachant que les zones du manchon s'appliquant sur les autres faces de délimitation (22, 26) de la chambre de compression perpendiculaires aux sections, sont repliées vers l'intérieur durant la compression ou le soudage.

8. Procédé selon au moins l'une des revendications précédentes,
**caractérisé en ce que**
le manchon (62, 80, 96, 200) présente une forme de trompette à son extrémité ouverte, qui s'étend hors de la chambre de compression (16) lors de la production du noeud d'extrémité ou de passage (49, 71).

9. Procédé selon au moins l'une des revendications précédentes,
**caractérisé en ce que**
le manchon (62, 80, 96, 200) est positionné dans la chambre de compression (16) sur une longueur prédéfinie souhaitée.

10. Procédé selon au moins l'une des revendications précédentes,
**caractérisé en ce que**
l'extrémité ouverte du manchon (62, 80, 96, 200) présente un pourtour renforcé (68, 70), qui reste en dehors de la chambre de compression (16) lors du soudage.

11. Procédé selon au moins l'une des revendications précédentes,
**caractérisé en ce que**
le manchon (62, 80, 96, 200) utilisé est en cuivre ou en aluminium ou contient du cuivre ou de l'aluminium.

12. Procédé selon au moins l'une des revendications précédentes,
**caractérisé en ce que**
le manchon (62, 80, 96, 200) utilisé est composé de métal, tel que du nickel ou du cuivre, ou bien est composé de cuivre recouvert d'argent, d'or ou de nickel à l'intérieur et/ou à l'extérieur.

13. Procédé selon au moins l'une des revendications précédentes,
**caractérisé en ce que**
le manchon (62, 80, 96, 200) utilisé présente une épaisseur de paroi D telle que : 0,05 mm ≤ D ≤ 0,5 mm, et en particulier : 0,15 mm ≤ D ≤ 0,4 mm.

14. Procédé selon au moins l'une des revendications précédentes,
**caractérisé en ce que**
les conducteurs (50, 52, 54, 72, 74, 76, 78, 200, 102, 104, 206, 208, 219) utilisés sont composés de cuivre ou de cuivre recouvert d'aluminium, ou composés d'aluminium ou d'aluminium cuivré, ou étamés ou recouverts, ou composés d'un produit ferreux tel que de l'acier spécial.
